# EUROPEAN PATENT APPLICATION

(11) **EP 4 194 255 A1**
(43) Date of publication of application: **14.06.2023**
(21) Application number: 21214093.3
(22) Date of filing: 13.12.2021
(51) Int. Cl.: B60L 53/16

(54) **CHARGING CONNECTOR FOR AN ELECTRIC VEHICLE**

(71) Applicant: ABB E-mobility B.V., 2629 JG Delft (NL)
(72) Inventor: GARCIA-FERRE, Francisco, 5400 Baden (CH); VAN-DER-VEER, Clemens, 1507 EG Zaandam (NL); UGUR, Ali, 2545 XP Den Haag (NL)
(74) Representative: Maiwald GmbH

(57) **Abstract**

The invention relates to a charging connector for an electric vehicle comprising an internal connector (101), a mating interface (120), and an external enclosure (18). The internal connector (101) comprises at least two contact elements (102, 104), each configured to receive a charging wire (106, 108) on a first end and a contact on a second end, and to hold the contact. The internal connector (101) comprises further a contact holder (110) surrounding the connection elements and a front part of the connectors and which is configured to hold a potting cap (116) and the front part of the contacts. The internal connector (101) comprises further the potting cap (116) configured to receive a back part of the contact holder (110). The potting cap (116) is further configured to cover the back part of the internal connector (101) and a cable part containing the charging wires. The internal connector (101) comprises further a mating interface (120) covering the front part of the internal connector (101) and which is configured to receive a front part of the contact holder (110), and an external enclosure (118) consisting of two half shells and configured to cover a back part of the contact holder (110) and the potting cap (116). The mating interface (120) and the external enclosure (118) cover the potting cap (116) and are exchangeable.

## Description

### Technical Field

The invention relates to a charging connector for an electric vehicle.

### Background

A critical design aspect of EVCI (Electric Vehicle Charging Infrastructure) connectors relates to the dielectric design. The DC poles have to be insulated sufficiently with respect to each other and with respect to the environment. Environmental influences such as water, dust and humidity must be kept away from the inside of the connector. Water entering the connector may induce corrosion of contacts, and the corrosion products may increase leakage currents along the creepage path between the contacts. The conductive path created may enhance partial discharge effects or tracking, leading to sudden flashover and fatal failure of the connector. Current solutions have deficiencies in this respect. Moreover, in current solutions, the connectors have a low life cycle, especially if a damage due to electrical reasons or, for example, external mechanical forces, or material fatigue.

### Summary of the Invention

There is a desire to provide an improved charging connector.

The problem is solved by the subject-matter of the independent claim. Embodiments are provided by the dependent claims, the following description and the accompanying figures.

It shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a charging connector for an electric vehicle is provided. The charging connector comprises an internal connector, a mating interface, and an external enclosure. The internal connector comprises at least two contact elements, a contact holder and a potting cap. Each of the contact elements is configured to receive a charging wire on a first end, i.e., on a first end of the respective contact element, and a contact on a second end, i.e., on a second end of the respective contact element, and to hold the contact. The contact holder surrounds the contact elements and a front part of the contacts, and is configured to hold the potting cap and the front part of the contacts. The potting cap is configured to receive a back part of the contact holder and to cover the back part of the internal connector and a cable part containing the wires. The mating interface covers the front part of the internal connector and is configured to receive a front part of the contact holder. The external enclosure consists of two half shells and is configured to cover a back part of the contact holder and the potting cap. The mating interface and the external enclosure cover the potting cap and are exchangeable.

The term "back" relates to an area near in in direction to the cable coming from a charging station, opposed to the term "front" that relates to an area near or in direction to the mating interface or parts that interface with the vehicle socket.

The contact holder is a central part to which the mating interface and the external enclosure are attached, which holds the contact elements and partly the contacts, and which has a structure that allows to be enclosed by the external enclosure. The contact elements, represent electrically and mechanically the connection of the wires with the contacts. The contacts are the parts that receive the pins of the vehicle charging socket and represent therefore the electrical and mechanical connection of these pins with the charging connector. The potting cap is part of the internal connector and covers at the same time the back part of the internal connector, i.e. the inner parts of the internal connector. Therefore, one function of the potting cap and the mating interface is to form enclosures for the inner parts and structures.

According to an embodiment, the internal connector comprises sealed independent compartments for the contacts.

Therefore, the external enclosure forms a first protection layer, the internal connector forms a second protection layer, and the sealed independent compartments inside the internal connector form a third protection layer. The independent compartments comprise the contacts that are configured to receive the pins of a vehicle socket, and to be in contact with the contact element to guide the charging current from the wires via the contact elements and the contact to the pin of the vehicle socket. A contact is partly outside the independent compartment and partly inside the independent compartment. The part outside the sealed independent compartment is that part that receives the pin of a vehicle socket. The part inside the independent compartment is connected to the front part of the contact element, which again receives the wire on its back part. The separation between "outside" and "inside" is accomplished by a gasket surrounding circumferential the contact located roughly in the middle of the contact.

The second layer is in-between the above described sealed independent compartments and inside the external enclosure. Especially, it contains the enclosures formed by the contact holder and the potting cap. These enclosures have also gaskets such that they provide a protection with a high protection level against ambient influences.

The third layer contains the external enclosure and the outer parts of the mating interface. The external enclosure is in direct contact with the environment and has therefore to be made of a robust material. The external enclosure covers the potting cap completely and parts of the contact holder. The other part of the contact holder is covered by the mating interface, such that the external enclosure and the mating interface form the interface to the environment and are the parts visible to a user.

Summarized, each protection layer provides an ambient protection and/or an electrical protection. The first layer is the tightest one since no water, moisture or dirt shall intrude the most internal part where the contacts and the de-insulated wires are located.

According to an embodiment, the contact holder, the potting cap, and the external enclosure have a locking mechanism for locking the mating interface to the contact holder and the potting cap to the contact holder.

The term "locking mechanism" is intended to be interpreted very broadly herein and was chosen as an umbrella term for subsequently described mechanisms or arrangements. The locking mechanisms allow not only for assembling the charging connector fast and easily but allows also for exchanging the parts in a fast and easy way thereby facilitating the maintenance of the charging connector.

According to an embodiment, the locking mechanism is one of a clamping, clipping or engaging arrangement.

For example, the mating interface may slides into the contact holder and the two parts both are fixed together by an engaging mechanism. Similarly, the potting cap slides into the contact holder and the two parts are fixed together by a clipping mechanism.

According to an embodiment, the charging connector further comprises a respective exchangeable contact for each of the contact elements.

The respective exchangeable contacts are configured to provide the galvanic contact to the vehicle socket, the first and the second ends of each of the contact elements are open cylinders that are connected integrally by a massive medium part, and each of the open cylinders of the second end is configured to receive the respective exchangeable contact. Thus, also a contact is provided that is exchangeable and a use of such an exchangeable contact in a charging connector as described herein.

Under the term "open cylinders" cylindrical parts are understood, that are hollow, in principle like a pipe, but which may have only one open side. The other side may be filled, for example, with the material of the pipe, herein described as "massive", or may end at a wall. In this embodiment, there is a massive part in the middle of the contact elements, and the open cylinders extend from the massive part to both sides, i.e. to the front (second end) and to the back (first end), where "front" and "back" are terms as defined above.

The open cylinders of the first ends of the contact elements receive the wires of the charging cable. The wires are connected to the contact element in a fixed way such that the contact elements are not exchangeable. The open cylinders of the second ends receive the contacts.

In other words, compared to usual charging connectors, the "contacts" in terms of existing arrangements are split into a non-exchangeable part, which is referred to as "contact elements" and an exchangeable part, which is referred to as "contacts" in this disclosure.

According to an embodiment, the front part of the contact holder comprises open cylinders for each contact. The second end of the contact elements each enclose a hollow fixing element configured to fix one of the contacts, wherein the diameters of the open cylinders and the respective hollow fixing elements match to each other, such that the respective contacts are insertable into the open cylinders and the respective hollow fixing elements.

The contact holder holds the contact elements circumferentially. The second end of the contact elements encloses the hollow fixing elements also circumferentially. In longitudinal direction the contact elements and the hollow fixing elements are fixed by the contact holder. For that, the contact elements and the hollow fixing elements abut against a step of the open cylinder of the contact holder.

In this way, the contact holder holds the contacts, contact elements and the hollow fixing elements, and the contacts can be inserted into the open cylinders of the contact holder and further into the fixing elements, which are for example lamellae elements that hold the contacts when inserted.

The front part of the contact holder and the contact elements form independent compartments for each of the contacts.

The contacts and the contact elements are designed such that they fit to each other without a bearing gap. In longitudinal direction, the contact elements are kept in place by the fixing elements and the mating interface. For this, the mating interface may have flexible clips that lock when the contacts are fully inserted. For removing the contacts, a pressure has to be applied radially on the flexible clips. Instead of clipping, the mating interface may be attached to the contact holder after inserting the contacts into the contact element, and for removing this procedure is performed in reverse order. Therefore, the contacts are also exchangeable.

According to an embodiment, the back part of the contact holder comprises open cylinders with a second diameter greater than the first diameter for each contact such that it encloses the second end of the contact elements and such that it separates the contacts from each other.

Although this is valid for all contacts, this embodiment aims especially at the DC+ and DC-contacts that are positioned next to each other. As already mentioned above, the contact holder and a connection element form an independent compartment for each of the contacts. Described for one contact, this is achieved by the open cylinder of the contact holder and of the contact element that form together so-to-say seamlessly a single compartment. The contact holder encloses at its front part the contact and at its back part the contact element.

According to an embodiment, the open cylinders in the back part of the contact holder have a protrusion that forms a wall between the wires prolonging a creeping distance between the wires.

The wall is arranged at least in the area between the DC+ and the DC- contact elements including the end parts of the corresponding wires. The wall extends to the area where the insulation of the wires begins. Therefore, the creeping distance from the end of the wires to the start of the insulation of the wires may have a value of more than 35mm. It may be extended up to, e.g., 120 mm.

According to an embodiment, a space around the wires and the open cylinders at the front part of the internal connector are filled with resin.

The resin is the potting material and forms the main part of the potting cap. It provides mechanical stability and fixes the wires to the contact elements, and further insulates the front part of the internal connector from any external influences. For example, the intrusion of humidity, water or other ambient substances is avoided. The resin surrounds or adjoins also parts of the contact holder such that these parts are not exchangeable without major effort.

According to an embodiment, the charging connector further comprises a sealing surrounding the cable.

The sealing, for example, a gasket, surrounding the cable that goes into the contact element, prevents potting material, i.e. the potting resin, from flowing out of the potting cap during the potting process.

According to an embodiment, the contacts are lamellae contacts, tulip contacts or spring contacts.

Such contact types have good mechanical characteristics for keeping the contact and the contact element together and have also good electrical characteristics in high current applications.

According to an embodiment, the contacts are configured to be fixed using screws.

According to an embodiment, the contact holder and the contact elements are locked together by gluing, by clips or by screws.

In the back part of the internal connector, the resin already ensures a mechanical connection between the contact element and the contact holder. The locking by gluing, by clips or screws provides a fixation especially of the front part of the contact element.

According to an embodiment, a temperature sensor is positioned at the massive part of one of the contact elements.

There may be one temperature sensor for each contact element, especially for the DC+ and DC- contact elements. This position is an optimal position for the temperature sensors because the actual temperature of interest is in the exchangeable main contact system within the mating interface. The temperature sensors are kept in position by pressure applied by the contact holder onto them.

According to an embodiment, the external enclosure has locking arrangements for fixing and removing the external enclosure from the contact holder and the potting cap.

The locking arrangements may be threads, clamping arrangements and/or engaging arrangements such that the external enclosure is removable without damaging parts of the charging connector, and such that the external enclosure is exchangeable.

The connector is therefore built as a matrioska, with one internal connector or "potting cap" inside another external enclosure, and independent compartments for the contacts within the in-ternal connector inside the external. Two important features of this connector arrangement are that (i) the plastic parts are exchangeable such as the mating interface and the outer enclosures; (ii) all contacts are exchangeable, and the contact technology, such as lamellae contacts, tulip contacts, spring contacts that can be used alike, can be selected independently. The exchange is enabled either by a double contact system or by screwing. The contact holder and the potting cap are locked together by gluing or screws or, preferably, by clips. The mating interface slides onto the internal connector and they are both fixed together by a clipping mechanism that allows for easy exchange of the parts, for example, in less than 30 minutes.

These and other features, aspects and advantages of the present invention will become better understood with reference to the accompanying figures and the following description.

### Short description of the Figures

- Fig. 1: shows a diagram of a charging connector in an assembled state.
- Fig. 2: shows an exploding diagram of the charging connector.
- Fig. 3: shows a diagram where contact elements are removed.
- Fig. 4: shows a diagram with of the mating interface, contact holder and potting cap.
- Fig. 5: shows a schematic diagram of the internal connector.
- Fig. 6: shows a schematic diagram with further views of the internal connector.

### Description of Embodiments

Corresponding parts are provided with the same reference symbols in all figures.

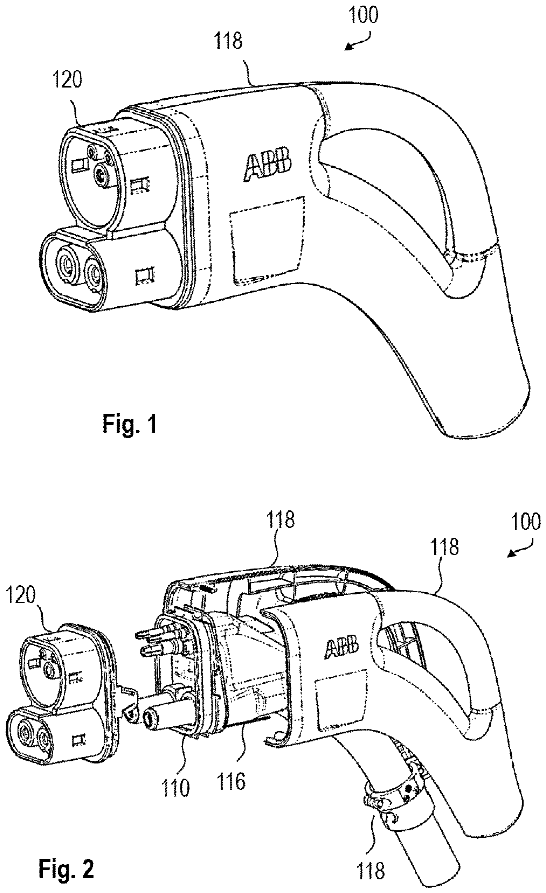

Fig. 1 shows a diagram of a charging connector 100 in the assembled state. In this state the mating interface 120 and the external enclosure 118 are visible.

Fig. 2 shows an exploding diagram of the charging connector 100. In this diagram the contact holder 110, which is in an assembled state covered by the mating interface 120, and the potting cap, which is in an assembled state covered by the external enclosure 118, are illustrated. In Fig. 2, the external housing 116 and the contact holder 110 are still connected to each other. It can be seen further that the external enclosure 118 consists of two half shells. To enclose the potting cap 116 and the back part of the contact holder 110 the half shells are placed on the sides of the potting cap 116 and the contact holder 110. The two half shells may be assembled by screws and/or clipping or similar mechanisms.

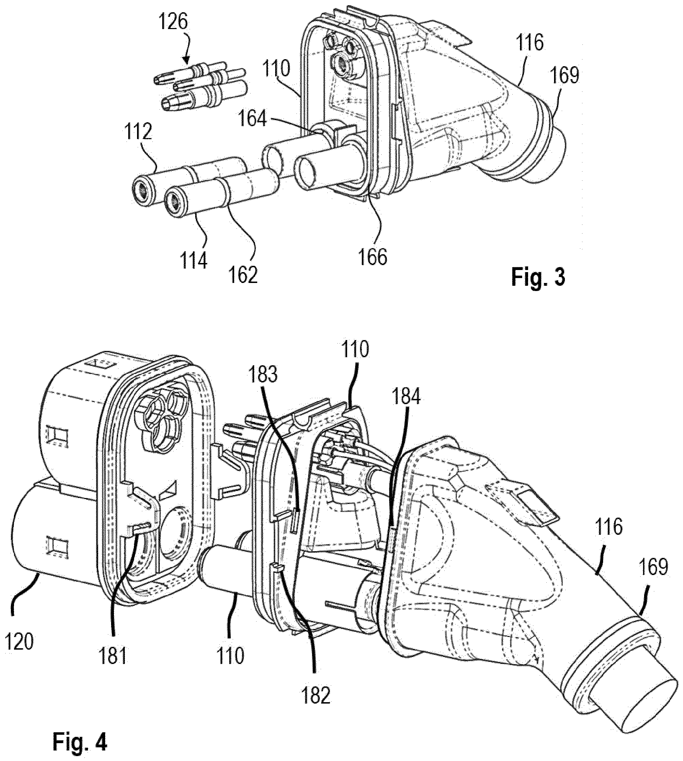

Fig. 3 shows a diagram where contact elements 112, 114 and 126 are removed from the contact holder 110. The contact elements are a DC+ contact 112 and a DC- contact 114 at the lower side of the contact holder 100, and further contacts 126 including for example a contact for the neutral line at the upper side of the contact holder 100. Further, Fig. 3 shows various gaskets 162, 164, 166, and 169 for tightening the respective parts on which the gaskets are mounted with respect to the parts that are surrounding them such as the contact holder 110 or the external enclosure 118. In detail, gasket 162 represents the gasket between contacts 112, 114, and contact holder 110, gasket 164 and 166 represent gaskets between contact holder 110 and the mating interface 120, gaskets 166 represent the gasket between contact holder 110 and mating interface 120, and finally, gasket 169 represents the gasket between potting cap 116 and the external enclosure 118.

As can be seen from Fig. 2 and Fig. 4, the assembly is modular, that is, the parts can easily be exchanged. The shown parts are clamped or clipped, or in case of the half shells fixed using screws. The charging connector 100 is built as a matrioska, with independent compartments for the contacts 112, 114 within the internal connector 101, and the internal connector 101 is inside an external enclosure 118.

Fig. 4 shows a diagram with the three intermateable parts mating interface 120, contact holder 110 and potting cap 116, which can be joint together by clipping. The mating interface 120 has, for example, clips 181 on each side. The arms of each clip are flexible such that they are pressed together when sliding and clip into the protrusions 182 arranged at the contact holder 110. The potting cap 116 may have, for example, nose-like protrusions 184 on each side that clip into recesses 183 of the contact holder 110.

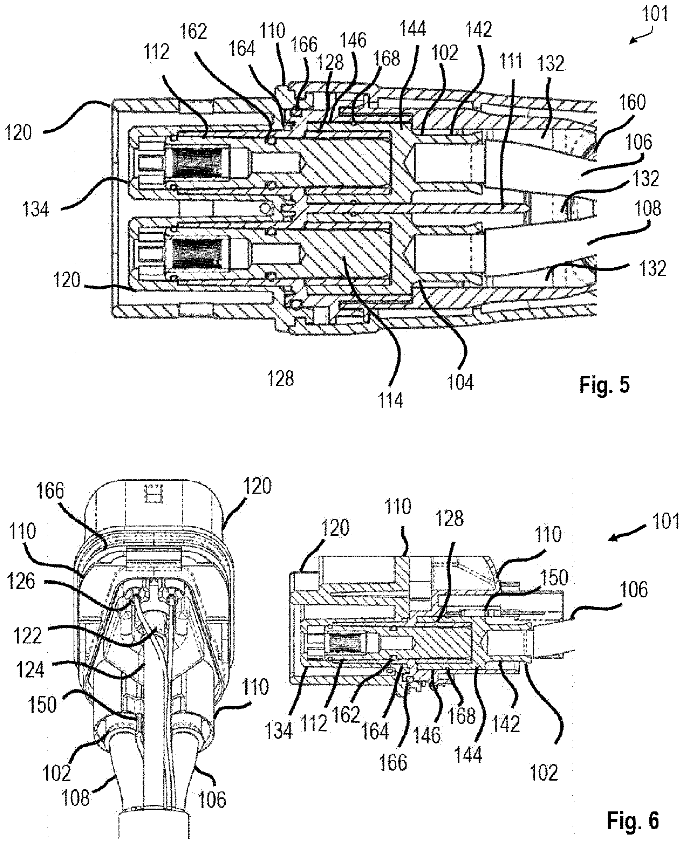

The contact holder 110 is part of the internal connector 101, which is illustrated in Fig. 5. The internal connector 101 comprises several further elements as described below.

Fig. 5 shows a schematic diagram of the internal connector 101 with potting cap 116, contact holder 110, sealing element 169, O-rings 166 and 164, and the electrical contacts with their respective O-rings 112, 114, 126, 162. The two connection elements 102, 104 connect the DC+ and DC- wires 106 and 108 with the contacts 112 and 114, respectively. The contacts 112 and 114 and the connection elements 102, 104 are hold by contact holder 110, which also separates the contacts 112 and 114 and the connection elements 102, 104 galvanically. The contacts 112, 114 are further hold in longitudinal direction by a contact fixing element such as a clip, a structure or insert, and by a contact fixing element 128 such as a lamellae, tulip or spring element that also provides a galvanic connection between the contacts 112, 114 and the contact element 102.

The contact element 102 comprises a first end 142 of cylindrical shape where the cylinder is open on one side to the back direction, which is the right side in Fig. 4, to receive the wire 106. It comprises further a second end 146 of cylindrical shape where the cylinder is open to the front direction, which is the left side in Fig. 4, on one side. The second end 146 encloses the contact-fixing element 128 that receives the contact 112. Between the first end 142 and the second end 142, there is a massive middle portion 144, which has also a cylindrical shape.

The contact element 104 is built in the same way as contact element 102.

The contact holder 110 encloses the cylinder of the massive middle portion 144 and the second end 146 of the contact element 102 where it is in direct contact with the contact element 102. At the edge of the second end 146 of the contact element 102, there is a step such that the contact holder 110 has a cylinder with smaller diameter that prolongs the cylinder of the second end 146 of the contact element 102 to receive and hold the contact 112, which may be inserted from the front side into this contact holder part and second end 146 of the contact element 102. However, the step size is greater than the thickness of the cylinder wall of the second end 146 such that there is room for clipping in the contact 112. Between the DC+ and DC- wires 106, 108, a part 111 of the contact holder 110 is shown which extends the creepage distance to more than 30 mm. This part may be further extended to more than 100 mm.

Contact 112 has a massive part and an open part. The massive part is on the back side, i.e. the side looking at the cables, which is the right side in Fig. 5. The open part, looking to the front, is designed to receive the pins of the vehicle socket, i.e., the left side in Fig. 5. A mating interface 120 that is attached to the front side of the contact holder 110 prolongs this open part such that a direct contact with, for example, fingers of a user is prevented. The mating interface therefore covers the front side of the connector, and especially the contacts. The same applies to contact 114.

In Fig. 5 and 6 five gaskets 160, 162, 164, 166, 168 are shown. The first one 160 is arranged at the back end of the internal connector 101 for maintaining the resin 132 while it is filled into the hollow volume around the wires 106, 108. The second one 162 tightens the contact with respect to the contact holder 110. This gasket 162 is part of the contact 112. The third gasket 164 tightens contact holder 110 with respect to the mating interface 120 when the mating interface 120 is pressed to the contact holder 110 in an assembled state. The further gaskets 166 and 168 tighten the contact holder 110 with respect to mating interface 120.

As can be seen in Figs. 5 and 6, the contact holder 110 has a complex structure to fulfill different functions. First, it holds the contacts 112, 114. Besides of the DC+ and DC-connections (contact element 102 and contacts 112, 114), it also holds the contact element 122 for neutral line wire 124 and for further contacts 126. Since the neutral line wire 124 is distant from the DC+ and DC- connections offset from a plane spanned by the DC+ and DC-contact elements 102, 104, the contact holder 110 has a middle portion that is perpendicular to the plane spanned by the DC+ and DC- such that neutral contact element 122 and further contact elements 126 are oriented in parallel to the contact elements 102, 104.

Further, contact holder 110 accommodates temperature sensors 150 that have direct contact with the connection elements 102, 104, and that are arranged in the area of the massive portion 144 of the contact elements in longitudinal direction between the contact element 102 and the contact holder 110.

Further functions of the contact holder 110 are, for example, to be the connection element to hold the mating interface 120 and the potting cap 116 together and to tighten the internal connector 101 against liquids, dirt and other ambient elements, to provide a high creepage distance and to protect the user.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### List of reference signs

- 100: charging connector
- 101: internal connector
- 102: (first) contact element
- 104: (second) contact element
- 106: DC+ wire
- 108: DC-wire
- 110: contact holder
- 111: part of the contact holder to extend creepage distance
- 112: (first) contact
- 114: (second) contact
- 116: potting cap
- 118: external enclosure
- 120: mating interface
- 122: (third) contact element
- 124: neutral line wire
- 126: further contacts
- 128: contact fixing element (e.g., lamellae / tulip / spring element)
- 132: resin
- 134: clip / structure / insert to hold the contacts in longitudinal direction
- 142: first end of cylindrical shape of contact element 102
- 144: middle (massive) part of contact element 102
- 146: second end of cylindrical shape of contact element 102
- 150: temperature sensor
- 160: gasket for resin
- 162: gasket contact - contact holder
- 164: gasket contact holder - mating interface
- 166: gasket contact holder - mating interface
- 168: gasket contact element - contact holder
- 169: gasket potting cap- external housing
- 181: clips on the mating interface, Clipping mechanism on mating interface
- 182: protrusions on the contact holder (clipping mechanism on contact holder for mating interface)
- 183: recess on the contact holder (clipping mechanism on contact holder for external connector)
- 184: nose-like protrusions on the potting cap, (clipping mechanism on external connector for contact holder)

## Claims

1. Charging connector (100) for an electric vehicle comprising:
an internal connector (101) comprising
at least two contact elements (102, 104), each configured to receive a charging wire (106, 108) on a first end and to receive and hold a contact (112, 114) on a second end,
a contact holder (110) surrounding the contact elements (102, 104) and a front part of the contacts (112, 114), and configured to hold a potting cap (116) and the front part of the contacts (112, 114), and
the potting cap (116) configured to receive a back part of the contact holder (110) and to cover a back part of the internal connector (101) and a cable part containing the charging wires (106, 108);
a mating interface (120) covering a front part of the internal connector (101) and configured to receive a front part of the contact holder (110);
an external enclosure (118) consisting of two half shells and configured to cover the back part of the contact holder (110) and the potting cap (116);
wherein the mating interface (120) and the external enclosure (118) cover the potting cap (116) and are exchangeable.

2. Charging connector (100) according to claim 1, wherein the internal connector (101) comprises sealed independent compartments for the contacts (112, 114).

3. Charging connector (100) according to any one of claims 1 or 2, wherein the contact holder (110), the potting cap (116), and the external enclosure (118) have a locking mechanism for locking the mating interface (120) to the contact holder (110) and the potting cap (116) to the contact holder (110).

4. Charging connector (100) according to claim 3, wherein the locking mechanism is one of a clamping, clipping or engaging arrangement.

5. Charging connector (100) according to any one of the previous claims, wherein
the charging connector (100) further comprises a respective exchangeable contact (112, 114) for each of the contact elements (102, 104, 122);
the respective exchangeable contacts (112, 114) are configured to provide the galvanic contact to the vehicle socket;
the first (142) and the second (146) ends of each of the contact elements (102, 104, 122) are open cylinders that are connected integrally by a massive medium part (144); and
each of the open cylinders of the second end (146) is configured to receive the respective exchangeable contact (112, 114).

6. Charging connector (100) according any one of the previous claims, wherein
the front part of the contact holder (110) comprises open cylinders for each contact (112, 114);
the second end (146) of the contact elements (102, 104) each enclose a hollow contact fixing element (128) configured to fix one of the contacts;
wherein the diameters of the open cylinders and the respective hollow contact fixing elements (128) match to each other, such that the respective contacts are insertable into the open cylinders and the respective hollow contact fixing elements (128).

7. Charging connector (100) according any one of the previous claims, wherein the back part of the contact holder (110) comprises open cylinders with a second diameter greater than the first diameter for each contact such that it encloses the second end (142) of the contact elements (102, 104) and such that it separates the contacts from each other.

8. Charging connector (100) according any one of the previous claims, wherein the open cylinders in the back part of the contact holder (110) have a protrusion that forms a wall between the wires prolonging a creeping distance between the wires.

9. Charging connector (100) according any one of the previous claims, wherein a space around the wires and the open cylinders at the front part of the internal connector (101) are filled with resin (132).

10. Charging connector (100) according to claim 9, wherein the charging connector (100) further comprises a sealing surrounding the cable.

11. Charging connector (100) according any one of the previous claims, wherein the contacts (112, 114, 126) are lamellae contacts, tulip contacts or spring contacts.

12. Charging connector (100) according any one of the claims 1 to 10, wherein the contacts (112, 114) are configured to be fixed using screws.

13. Charging connector (100) according any one of the previous claims, wherein the contact holder (110) and the contact elements (102, 104, 122) are locked together by gluing, by clips or screws.

14. Charging connector (100) according any one of claims 5 to 13, wherein a temperature sensor (150) is positioned at the massive part (144) of one of the contact elements (102, 104, 122).

15. Charging connector (100) according to any one of the previous claims, wherein the external enclosure (118) has locking arrangements for fixing and removing the external enclosure (118) from the contact holder (110) and the potting cap (116).
